# EUROPÄISCHE PATENTANMELDUNG

(11) **EP 2 386 688 A2**
(43) Veröffentlichungstag der Anmeldung: **16.11.2011**
(21) Anmeldenummer: 11001381.0
(22) Anmeldetag: 19.02.2011
(51) Int. Cl.: E01B 29/02, E01B 29/05

(54) **Transportsicherung für Güter**

(30) Priorität: 11.05.2010 DE 102010020273
(71) Anmelder: DB Netz AG, 60486 Frankfurt am Main (DE)
(72) Erfinder: Mächler, Frank, 44894 Bochum (DE)
(74) Vertreter: Zinken-Sommer, Rainer

(57) **Zusammenfassung**

Transportsicherung für Güter, wie Schienen oder aus Schienen aufgebauten Baugruppen einer Weiche, mit mindestens einer transportablen Auflage für das Gut, wobei die Vorrichtung mindestens eine Quertraverse (1) sowie mindestens zwei Zuganker umfasst, wobei jeder Zuganker als eine drehfest mit der Auflage (4) für das Gut verbundene, lotrecht zu dieser ausgerichtete und in jeweils eine Durchgangsbohrung der Quertraverse eingreifende Gewindestange ausgeführt ist sowie die Quertraverse in Bezug auf jeden Zuganker mittels jeweils einer Spindelmutter (3) in Richtung von dessen Längsachse verstellbar ist.

## Beschreibung

Die Erfindung betrifft eine Transportsicherung für Güter, wie Schienen oder aus Schienen aufgebauten Baugruppen einer Weiche, mit mindestens einer transportablen Auflage für das Gut.

Der Transport von Schienen und aus Schienen aufgebauten Eisenbahnweichen, beispielsweise vom Herstellerwerk zur Gleisbaustelle, erfordert auf Grund des Gewichtes und der Größenabmessungen dieser Bauteile seit jeher besondere logistische Maßnahmen, damit derartige Transporte sicher und effizient durchgeführt werden können.

So entspricht es beispielsweise dem Stand der Technik, vormontierte Weichen auf speziellen Weichentransportwagen vom Herstellerwerk zur Baustelle zu transportieren. So offenbart beispielsweise die DE 100 42 262 A1 einen hierfür geeigneten Transportwagen mit einer ebenen Ladeplattform, deren Länge und Breite derart dimensioniert sind, dass eine Weiche hierauf in nahezu komplett vormontiertem Zustand abgelegt und gesichert werden kann. Die Ladeplattform ist um eine zur Wagenlängsachse parallele Drehachse schwenkbar und somit aus der horizontalen Be- bzw. Entladestellung in eine mit dem Lichtraumprofil des Eisenbahn-Streckennetzes kompatible Transportstellung überführbar. Allerdings sind derartige Spezialfahrzeuge für andere Transportgüter ungeeignet und müssen deshalb in speziellen Umläufen ― zumeist mit leeren Rückläufen - disponiert werden. Sie verursachen somit nicht nur in der Anschaffung sondern auch im operativen Betrieb enorme Kosten.

Des Weiteren ist es aus der DE 20 2004 019 248 U1 bekannt, für den Transport von Schienen spezielle Schienenauflagevorrichtungen einzusetzen. Hierbei handelt es sich um mindestens ein Paar einander gegenüberstehender horizontaler Stützen, wobei an einer der beiden Stützen mehrere horizontal ausgerichtete und zueinander in vertikaler Richtung beabstandete Tragbalken angeordnet sind, die jeweils mittels eines eine Kulissenführung aufweisenden Gelenkes axial um die Längsachse dieser Stütze drehbar sind. Die Tragbalken sind zwischen einer Transportstellung und einer Be-/Entladestellung verschwenkbar. In der Transportstellung ist jeder Tragbalken auf seiner Oberseite mit einer Mehrzahl von Schienen beladbar, wobei ein solcher mit Schienen beladener Tragbalken mit seiner Unterseite auf den Oberseiten der Schienen des nächsttieferen Tragbalkens aufliegt. Allerdings weist die Nutzung derartiger Schienenauflagevorrichtungen bzw. Transportwagen den Nachteil auf, dass die Schienen jeweils einzeln und lageweise ver- bzw. entladen werden müssen, was vergleichsweise langwierig ist und hohe organisatorische Anforderungen an die Baustelle vor Ort stellt, da jede einzelne Schiene bzw. aus Schienen aufgebaute Baugruppe beim Abladen identifiziert und in einer für den weiteren Bauablauf geeigneten Örtlichkeit bzw. Position abgelegt werden muss.

Der Erfindung liegt daher die Aufgabe zugrunde, eine Transportsicherung für Güter, wie Schienen oder aus Schienen aufgebauten Baugruppen einer Weiche, mit mindestens einer transportablen Auflage für das Gut bereitzustellen, die ein effizienteres Disponieren und schnelleres Umschlagen der Güter auf bzw. von Transportfahrzeugen ermöglicht. Zugleich soll eine möglichst hohe Ausnutzung des für Lagerung und Transport zur Verfügung stehenden Raumvolumens erreicht werden.

Erfindungsgemäß wird diese Aufgabe in Verbindung mit dem Oberbegriff des Schutzanspruches 1 dadurch gelöst, dass die Transportsicherung mindestens eine Quertraverse sowie mindestens zwei Zuganker umfasst, wobei jeder Zuganker als eine drehfest mit der Auflage für das Gut verbundene, lotrecht zu dieser ausgerichtete und in jeweils eine Durchgangsbohrung der Quertraverse eingreifende Gewindestange ausgeführt ist sowie die Quertraverse in Bezug auf jeden Zuganker mittels jeweils einer Spindelmutter in Richtung von dessen Längsachse verstellbar ist.

Auf diese Weise ist die Quertraverse höhenverstellbar in Bezug auf die Auflage für das Gut ausgeführt und gegen diese durch das Anziehen der Spindelmuttern verspannbar. Wenn auf der Auflage ein Transportgut ― beispielsweise in Form einer Mehrzahl von Schienen oder aus Schienen aufgebauten Baugruppen einer Eisenbahnweiche ― aufliegt, so ist dieses in kraftschlüssiger Weise zu einem Paket mit der erfindungsgemäßen Vorrichtung zusammenspannbar. Die einzelnen Schienen bzw. Baugruppen können dabei auch in an sich bekannter Weise durch das Einfügen von Zwischenlagen auf mehrere Ebenen dieses Paketes aufgeteilt werden. Dabei sind die mittels der Spindelmuttern in den Zugstangen erzeugbaren Längskräfte für das Verspannen von mindestens drei Schienenlagen mit der erfindungsgemäßen Transportsicherung ausreichend. Falls die zu einer gemeinsamen Lage zusammengefassten Schienen unterschiedliche Bauhöhen haben, sind die in Bezug auf die maximale Bauhöhe des größten Schienenprofiles fehlenden Differenzhöhen mittels Ausgleichselementen, die unter die jeweils kleineren Schienenprofile eingelegt werden, kompensierbar.

Mittels der erfindungsgemäßen Vorrichtung ist es beispielsweise möglich, die vormontierten Baugruppen einer vom Herstellerwerk zur Baustelle zu transportierende Eisenbahnweiche räumlich und zeitlich unabhängig vom tatsächlichen Versand auf die Baustelle vorab zu kommissionieren und für den Transport vorzubereiten. Ein derartig kommissioniertes Paket ist dann relativ kurzfristig und mit minimalem Ladeaufwand für den Transport bereitstellbar. Durch die kompakte mehrlagige Bestückung eines solchen Paketes wird der Anteil von ungenutztem Transportraum reduziert und das Raumvolumen des zur Verfügung stehenden Transportmittels besser ausgenutzt. Das Paket ist beim Be- / Entladen als Ganzes kranbar und kann ebenso als Ganzes auf der Ladefläche des Transportfahrzeuges abgelegt werden. Verladungstechnisch ist eine bei Standardfahrzeugen übliche ebene Ladefläche mit Verzurrmöglichkeiten gegen horizontales Wandern oder vertikales Abheben des Paketes ausreichend. Derartige Fahrzeuge sind im Bedarfsfall als Standard am Markt weithin und zu günstigen Kostensätzen verfügbar und bedürfen deshalb keiner gesonderten Disposition. Ebenso könnten auf der Ladefläche eines Eisenbahn-Flachwagens beispielsweise zwei solche mittels erfindungsgemäßer Transportsicherungen aufgebaute Pakete nebeneinander geladen werden, so dass die Auslastung des Transportfahrzeuges erhöht wird.

Die erfindungsgemäße Transportsicherung bietet zudem Gewähr dafür, dass am Zielort auch alle zur selben Weiche bzw. zum selben Objekt gehörigen Bauteile bzw. Baugruppen zeit- und ortsgleich entladen und für den weiteren Bauablauf verfügbar sind. Ebenso ist am Entlade- bzw. Einbauort ein platzsparendes Disponieren und Zwischenlagern des Paketes möglich. Die Wahrscheinlichkeit einer fehlerhaften Zuordnung einzelner angelieferter Baugruppen zueinander auf der Baustelle wird drastisch reduziert.

Im Gegensatz zum vorbekannten Stand der Technik wird eine mittels der erfindungsgemäßen Transportsicherung zu transportierende Weiche also weder in Einzelteilen noch in komplett vormontierter Weise auf das Transportmittel verladen, sondern ein Mittelweg zwischen diesen beiden extremen Ansätzen gewählt.

Je nach Anzahl der zu transportierenden Schienen bzw. Baugruppen und deren Baulänge ist es von Vorteil, mindestens zwei oder bedarfsweise auch mehr erfindungsgemäße Transportsicherungs-Vorrichtungen je Paket einzusetzen. Dies ist insbesondere dann relevant, wenn das Paket mittels Seil oder Kette an einem Kranhaken angeschlagen werden soll.

Gemäß einer vorteilhaften Ausgestaltung der Erfindung ist jede Auflage und Quertraverse an jeweils einer mit dem Gut kontaktierbaren Außenfläche mit einer rutschhemmenden Beschichtung versehen. Auf diese Weise können die für einen sicheren Transport notwendigen Verschiebe-Widerstände des Ladegutes in Längs- bzw. Querrichtung auch mit niedrigeren durch die Zuganker aufzubringenden Vorspannkräften erreicht werden.

Der Erfindungsgedanke wird in nachfolgenden Figuren verdeutlicht. Es zeigen:
- **Figur 1**: Ansicht eines mittels einer erfindungsgemäßen Vorrichtung zur Transportsicherung gebildeten mehrlagigen Paketes mit Baugruppen einer Eisenbahnweiche
- **Figur 2**: Stirnansicht des Paketes aus Figur 1; Blickrichtung entlang Schienenlängsachse
- **Figur 3**: Seitenansicht des Paketes aus Figur 1
- **Figur 4**: Einzelheit H aus Figur 3
- **Figur 5**: Unteransicht des Paketes aus Figur 1
- **Figur 6**: Einzelheit G aus Figur 5

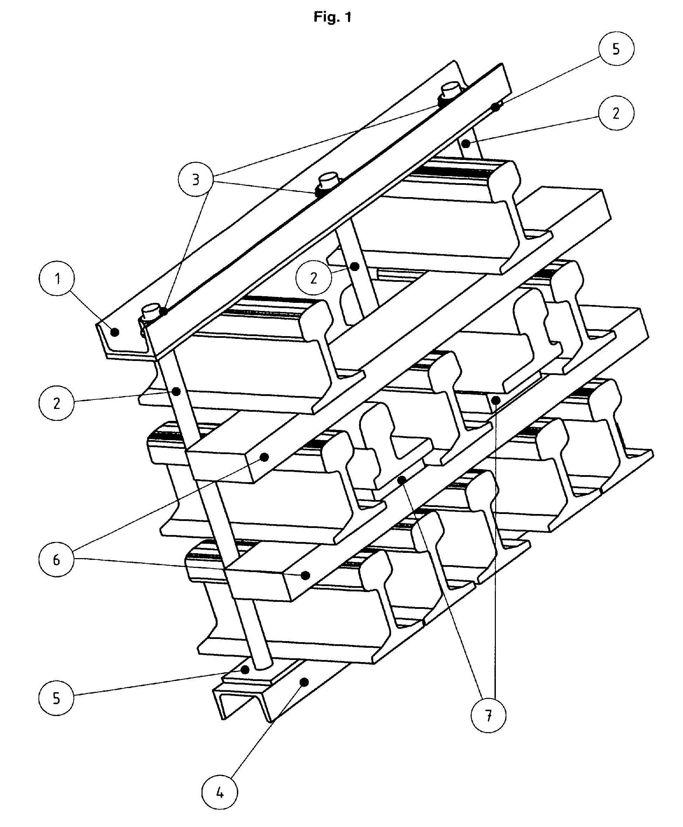

In Figur 1 ist ein Paket, gebildet aus einer erfindungsgemäßen Vorrichtung zur Transportsicherung sowie mehreren übereinander und mittels jeweils einer Zwischenlage (6) gegeneinander getrennten Lagen mit den verschiedenen Baugruppen einer Eisenbahnweiche, in perspektivischer Ansicht sowie partiell (d.h. in Schienen-Längsrichtung verkürzt) dargestellt. Die erfindungsgemäße Vorrichtung zur Transportsicherung umfasst eine obere Quertraverse (1), eine untere Auflage (4) sowie drei Zuganker (2). Die Zuganker sind jeweils drehfest mit der Auflage (4) verbunden und lotrecht zu dieser ausgerichtet. Weiterhin greifen die Zuganker in jeweils eine Durchgangsbohrung der oberen Quertraverse ein. Jeder Zuganker weist zumindest in dem von der unteren Auflage (4) entfernten Bereich ― idealerweise jedoch über die gesamte Länge ― ein Außengewinde auf. Jeweils eine Spindelmutter (3) sichert die Steckverbindung zwischen Zuganker und oberer Quertraverse gegen unbeabsichtigtes Lösen. Durch Betätigen der Spindelmuttern ist die obere Quertraverse in Richtung der Längsachsen der Zuganker verstellbar und gegen ein zwischen unterer Auflage und oberer Quertraverse eingelegtes Gut ― im dargestellen Beispiel die in mehreren Lagen übereinander angeordneten Baugruppen einer Eisenbahnweiche ― anstellbar und sicherbar. Zur Erhöhung des zwischen Transportsicherung und Transportgut wirksamen Kraftschlusses und zur Gewährleistung einer hinreichend großen Anpresskraft auch auf die im Inneren des Paketes angeordneten Schienen bzw. Weichen-Baugruppen weist die hier dargestellte erfindungsgemäße Transportvorrichtung nicht nur die beiden mindestens benötigten außenliegenden Zuganker sondern auch einen zusätzlichen innenliegenden dritten Zuganker auf. Zur Erhöhung der Wirksamkeit der Zuganker weisen sowohl die untere Auflage (4) als auch die obere Quertraverse (3) an ihren mit dem Ladegut kontaktierbaren Außenflächen jeweils einen rutschhemmenden Belag auf, der die Verschiebe-Widerstände des Ladegutes in Längs- bzw. Querrichtung erhöht. Ebenso können die Zwischenlagen (6) eine entsprechend rutschhemmende Oberfläche aufweisen. Im vorliegenden Fall ist jedoch eine Ausführung aus oberflächenrauhem Hartholz ausreichend.

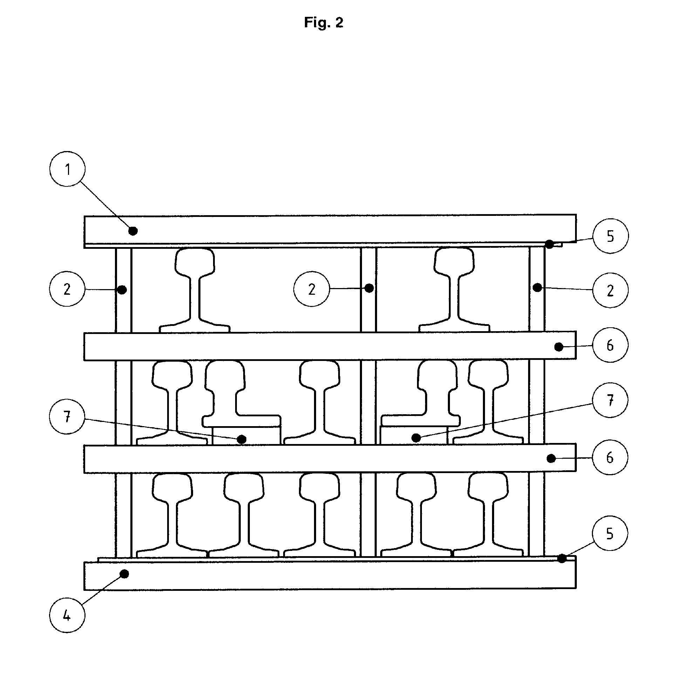

Die Figur 2 verdeutlicht dies an Hand einer Stirnansicht des aus erfindungsgemäßer Transportsicherung und Weichen-Baugruppen gebildeten Paketes (in Blickrichtung entlang der Schienenlängsachse). Hier ist auch erkennbar, dass zu transportierende Schienen mit einem niedrigeren Querschnittprofil durch das Einlegen von entsprechend angepassten Ausgleichsstücken (7) auf die in derselben Lage angeordneten größte Profilhöhe angeglichen sind.

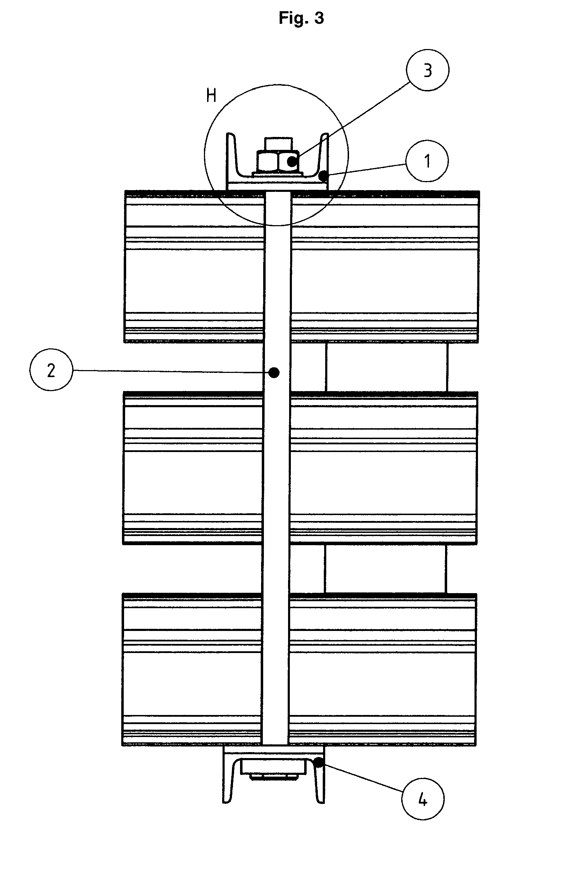

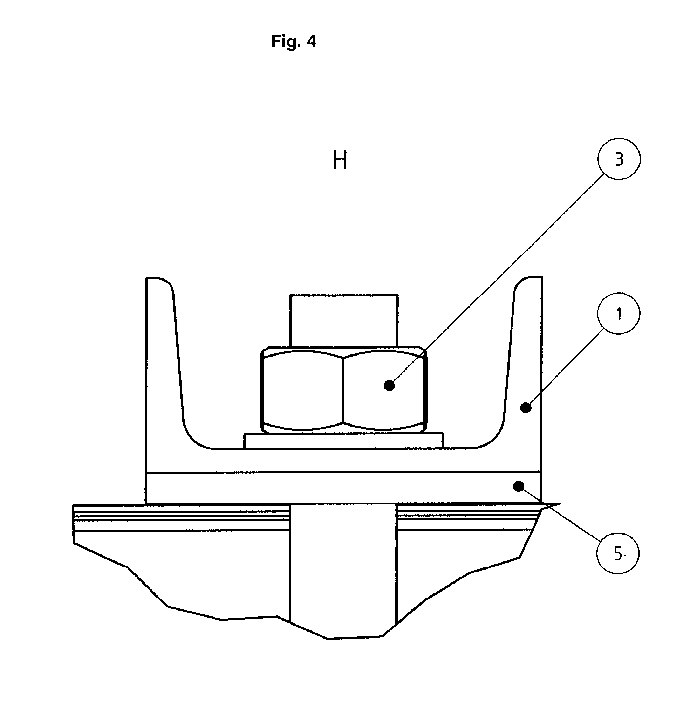

In den Figuren 3 und 4 ist einer der beiden außenliegenden Zuganker (2) dargestellt.

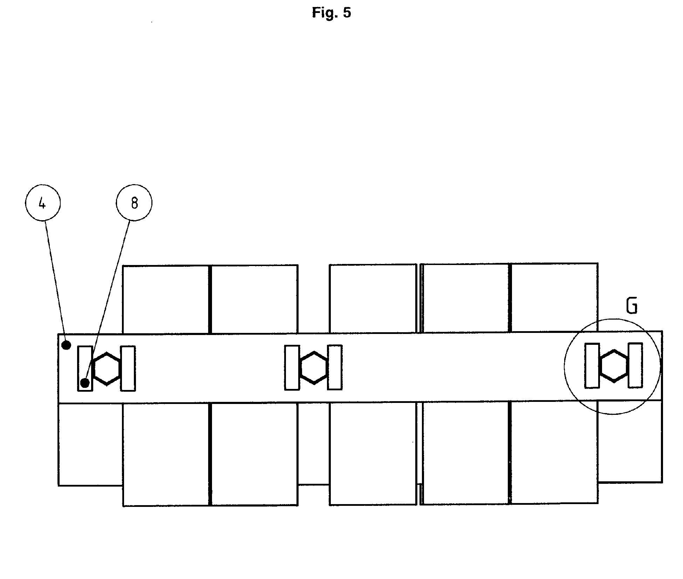

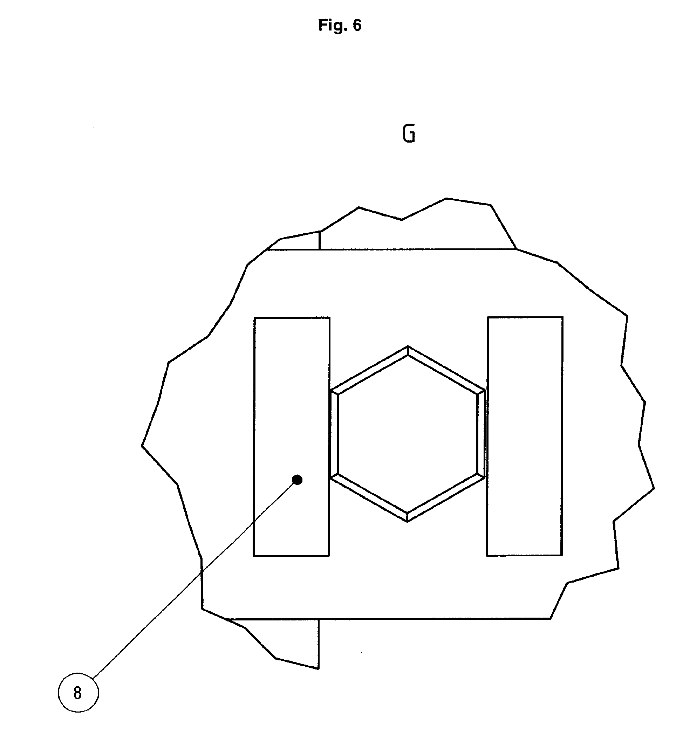

Aus den Figuren 5 und 6 ist ersichtlich, dass die Zuganker jeweils als Gewindebolzen mit einem Sechskant-Kopf ausgeführt sind. Da diese in den Durchgangsbohrungen der Auflage (4) jeweils axial drehbar wären, sind zusätzliche Verdrehsicherungen (8) vorgesehen. Alternativ hierzu könnten die Zuganker starr mit der Auflage verbunden sein (z.B. mittels einer Schweißverbindung), was jedoch wenig vorteilhaft ist. Durch die lösbare Verbindung zwischen Zugankern und Auflage können die Zuganker demontiert werden und die erfindungsgemäße Vorrichtung im demontierten Zustand platzsparend verstaut werden. Ebenso ist es möglich, in Abhängigkeit von den Dimensionen des zu sichernden Ladegutes Zuganker mit hierauf angepasster Länge einzusetzen, so dass ein zu großer Überstand der Zuganker nach oben über die Quertraverse hinaus vermieden wird.

### Bezugszeichenliste:

- 1: obere Quertraverse
- 2: Zuganker
- 3: Spindelmutter
- 4: untere Auflage
- 5: Beschichtung
- 6: Zwischenlage
- 7: Ausgleichsstück
- 8: Verdrehsicherung

## Patentansprüche

1. Transportsicherung für Güter, wie Schienen oder aus Schienen aufgebauten Baugruppen einer Weiche, mit mindestens einer transportablen Auflage für das Gut,
**dadurch gekennzeichnet, dass**
die Transportsicherung mindestens eine Quertraverse (1) sowie mindestens zwei Zuganker (2) umfasst, wobei jeder Zuganker als eine drehfest mit der Auflage (4) für das Gut verbundene, lotrecht zu dieser ausgerichtete und in jeweils eine Durchgangsbohrung der Quertraverse eingreifende Gewindestange ausgeführt ist sowie die Quertraverse in Bezug auf jeden Zuganker mittels jeweils einer Spindelmutter (3) in Richtung von dessen Längsachse verstellbar ist.

2. Transportsicherung für Güter nach Schutzanspruch 1, **dadurch gekennzeichnet, dass** jede Auflage (4) und Quertraverse (1) an jeweils einer mit dem Gut kontaktierbaren Außenfläche mit einer rutschhemmenden Beschichtung (5) versehen ist.
